# FASCICULE DE BREVET EUROPEEN

(11) **EP 1 707 437 B1**
(45) Date de publication et mention de la délivrance du brevet: **23.09.2009**
(21) Numéro de dépôt: 06290478.4
(22) Date de dépôt: 24.03.2006
(51) Int. Cl.: B60P 1/26

(54) **Système de déverrouillage de la porte arrière d'une benne**
System zum Entriegeln der Heckklappe eines Kippers
System for unlocking the tailgate of a dump bucket

(30) Priorité: 31.03.2005 FR 0503265
(43) Date de publication de la demande: 04.10.2006
(73) Titulaire: Sabarly, Jean-Philippe, 91872 Boissy-le-Sec (FR)
(72) Inventeur: Sabarly, Jean-Philippe, 91872 Boissy-le-Sec (FR)
(74) Mandataire: Flavenot, Bernard

(56) Documents cités:
- DE-A1- 2 057 766
- GB-A- 2 171 748
- NL-C2- 1 017 496
- US-A- 1 587 612
- US-A- 2 589 872

## Description

La présente invention concerne les systèmes de déverrouillage de la porte arrière d'une benne apte à être déchargée par l'arrière du châssis d'un véhicule automobile.

On sait qu'il existe des bennes qui sont utilisées pour recueillir et transporter vers des lieux de décharge déterminés, des déchets de toute nature.

Une telle benne comportant une porte arrière pivotante pour la vider des déchets transportés est par exemple illustrée dans le FR-A-2 850 619.

Lorsqu'il est nécessaire de transporter des déchets vers un lieu de décharge donné, il est procédé de la façon suivante. Une benne vide est tout d'abord placée sur le châssis d'un véhicule automobile pour la transporter sur le lieu de récupération des déchets. Elle est alors enlevée du véhicule suivant un processus bien connu des techniciens en ce domaine, au moyen d'un jeu de bras pivotants et de vérins de commande reliant ces bras, pour être posée sur le sol où elle demeurera pendant le temps nécessaire pour y verser les déchets à éliminer, le véhicule transporteur étant ainsi libéré pour d'autres tâches. Un exemple de déchargement d'une telle benne ou analogue est illustré dans le EP-A-0 558 367.

Bien entendu, de façon connue, la porte arrière de la benne est maintenue fermée et bloquée par des crochets pendant tout le temps du remplissage de la benne avec les déchets.

Quand la benne est remplie de déchets, ou quand tous les déchets à éliminer y ont été versés, le véhicule automobile est ramené sur le lieu de récupération des déchets et la benne pleine est remontée sur le châssis du véhicule suivant le processus inverse de celui ayant présidé à son déchargement, puis amenée sur le lieu de décharge donné. Bien entendu, lorsque la benne est remontée sur le châssis, elle peut être fortement inclinée vers l'arrière et sa porte arrière est toujours maintenue parfaitement fermée par les crochets.

Lorsque le véhicule portant la benne pleine de déchets arrive sur le lieu de décharge, le conducteur présente le véhicule de façon que l'arrière de son véhicule, et donc l'arrière de la benne, se trouve en surplomb de l'endroit où doivent être déversés les déchets.

Selon une possibilité, le conducteur commande alors le levage de l'avant de la benne pour lui donner une légère inclinaison vers l'arrière. Avec les systèmes de déverrouillage connus de la porte arrière de la benne, le conducteur est obligé de descendre du véhicule et de commander, par exemple au moyen d'un câble ou d'une manette, la rotation des crochets pour libérer la porte et permettre aux déchets de commencer à se déverser, leur déversement favorisant d'ailleurs l'ouverture de plus en plus grande de la porte.

Le conducteur retourne ensuite dans la cabine du véhicule pour commander le relevage maximum de la benne et obtenir avec certitude son vidage complet, puis le retour de la benne vide à sa place d'origine, c'est-à-dire en position horizontale sur le châssis du véhicule.

Il est évident que de telles manoeuvres présentent des inconvénients relativement importants.

Notamment, le fait que le conducteur soit obligé de descendre du véhicule pour manoeuvrer les crochets afin de déverrouiller la porte de la benne lui fait perdre un temps non négligeable.

Mais de plus, cette procédure oblige le conducteur à se déplacer sur le sol du lieu de la décharge. Or, ce sol est généralement peu stable et très souvent susceptible de contenir des matières et objets dangereux et/ou très sales, d'où un risque de blessures parfois graves avec en outre une perte de temps supplémentaire pour le nettoyage de ses bottes ou analogues avant de retourner dans la cabine du véhicule.

En plus, en se trouvant à proximité de la benne, il n'est pas à l'abri de recevoir un déchet tombant de cette benne, d'où un risque supplémentaire, pour lui, de blessures qui peuvent être graves.

Il a déjà été proposé des systèmes de déverrouillage de la porte arrière d'une benne qui tentent de pallier les inconvénients mentionnés ci-dessus, par exemple celui qui est décrit dans le NL 1 017 496.

Cependant, ce système présente encore un inconvénient constitué par le fait que l'ouverture de la porte n'est pas certaine. Ceci est dû au fait que, en se référant à la figure 3 de ce document néerlandais, les deux parties de la came constituant respectivement un point de rotation et une butée sont situées d'un même côté de la came 22 et sensiblement à une même distance du fond 14 du caisson 7 et que le vérin 5 solidaire du châssis 3 du camion est agencé de façon que sa tige de piston constituant la butée apte à coopérer avec la came se déplace suivant une direction perpendiculaire au plan du châssis.

En effet, pour déverrouiller la porte 15 du caisson 7, il faut commander le vérin de façon que la butée fasse pivoter la came 22 dans le sens senestrorsum pour dégager, au moyen des bielles 19, 20, le crochet 17 de la gâche 16. Or, dans ce genre de dispositif, il est possible, pour différentes raisons, que la porte 15 reste plaquée contre le caisson 7. Quand le conducteur va faire basculer le caisson 7 dans le sens senestrorsum, la partie sur laquelle vient buter la tige de piston de la came 22 va s'éloigner de la butée du vérin 5. Mais, sous l'action du ressort 25, il est fort possible que le crochet 17 se réengage dans la gâche 16 avant que la porte 15 ait eu le temps de s'ouvrir sous le poids des produits contenus dans le caisson, et donc l'action du système est dans ce cas inopérant.

Aussi, la présente invention a-t-elle pour but de réaliser un système de déverrouillage de la porte arrière d'une benne apte à être déchargée par l'arrière du châssis d'un véhicule automobile, qui pallie les inconvénients mentionnés ci-dessus des systèmes de déverrouillage de l'art antérieur et notamment celui du dispositif comme celui du document néerlandais.

Plus précisément, la présente invention a pour objet un système de déverrouillage de la porte arrière d'une benne apte à être déchargée par l'arrière du châssis d'un véhicule automobile, ladite benne comportant un caisson monté sur au moins deux bords respectifs de deux rails de support, les deux dits rails de support étant aptes à coulisser en translation, par leur bords libres opposés à ceux qui sont solidaires du caisson, sur le châssis du véhicule, le système de verrouillage comportant :
- au moins un crochet de retenue apte à maintenir la porte arrière en position fermée et monté pivotant autour d'un premier axe, ladite porte étant montée en rotation autour d'au moins un deuxième axe,
- un troisième axe de rotation lié à ladite benne sensiblement parallèle audit premier axe,
- une came à deux première et seconde extrémités montée en coopération avec ledit troisième axe,
- une tige de liaison dont les deux extrémités sont respectivement montées en rotation sur la première extrémité de la came et sur un point d'une partie liée au crochet, ledit point n'étant pas situé sur le premier axe,
- une butée montée en translation par rapport au châssis dans un espace délimité par le fond du caisson et les bords libres des deux rails et située entre la seconde extrémité de la came et l'avant du châssis, et
- des moyens commandables pour commander le déplacement en translation de ladite butée par rapport au châssis,
**caractérisé par le fait que** ladite came est en outre agencée de façon que ses première et seconde extrémités soient situées de part et d'autre du troisième axe et que l'une soit plus proche du fond du caisson que l'autre, et que lesdits moyens commandables pour commander le déplacement en translation de ladite butée par rapport au châssis sont agencés de façon que, dans le déplacement de ladite butée sensiblement de l'avant vers l'arrière dudit châssis, cette dernière soit apte à venir en appui contre la seconde extrémité de la came pour entraîner le déverrouillage de la porte arrière de la benne.

D'autres caractéristiques et avantages de l'invention apparaîtront au cours de la description suivante donnée en regard des dessins annexés à titre illustratif mais nullement limitatif, dans lesquels :

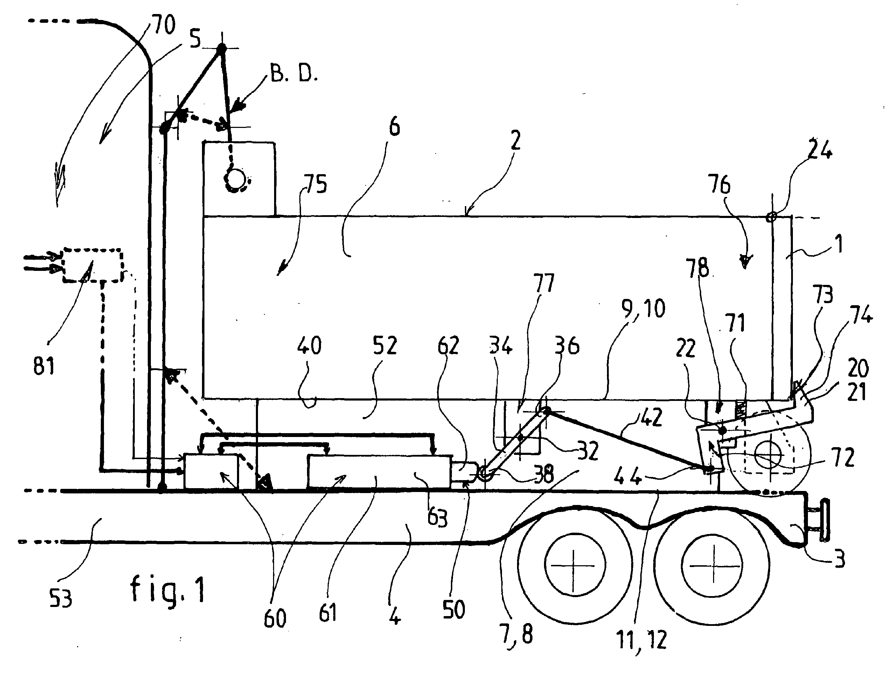

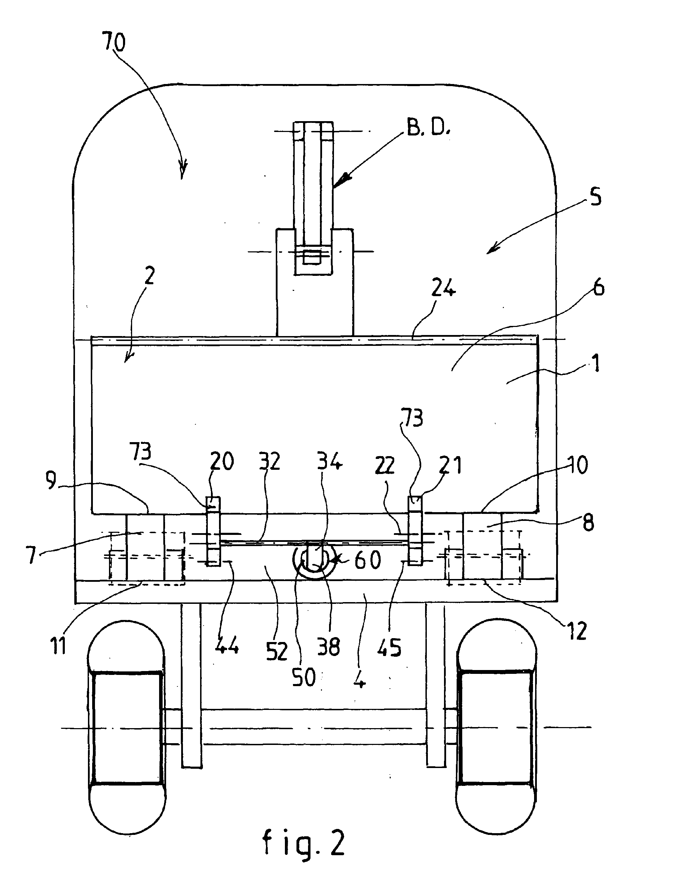

Les figures 1 et 2 représentent, sous forme schématique, un mode de réalisation préférentiel du système selon l'invention pour le déverrouillage de la porte arrière d'une benne apte à être déchargée par l'arrière du châssis d'un véhicule automobile, en combinaison avec une telle benne lorsqu'elle est située sur le véhicule automobile, la figure 1 étant une vue de côté et la figure 2 une vue arrière.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

En référence aux deux figures, la présente invention est relative à un système de déverrouillage de la porte arrière 1 ou analogue d'une benne 2 apte à être déchargée de son contenu par l'arrière 3 du châssis 4 d'un véhicule automobile 5, cette benne 2 comporte un caisson 6 monté sur au moins deux bords 9, 10 respectifs de deux rails de support ou analogues 7, 8, ces deux rails de support 7, 8 étant aptes à se déplacer en translation, par leur bords libres 11, 12 opposés à ceux 9, 10 qui sont solidaires du caisson 6, de façon directe ou indirecte, sur le châssis 4 du véhicule 5.

Il est à noter que ce système de déverrouillage s'applique quelle que soit la configuration de la porte 1 et la direction de son axe, ou ses axes, de rotation. Par exemple, sur les figures, la porte 1 est montée pivotante autour d'un axe 24 horizontal situé en partie haute du caisson. Mais elle peut aussi être, par exemple, constituée de deux battants montés pivotants autour de deux axes verticaux situés respectivement sur les bords opposés de l'arrière 76 du caisson.

Plus précisément, le système de déverrouillage selon l'invention comporte au moins un crochet de retenue 20, 21, le mode de réalisation illustré sur les figures en comportant deux, ce crochet étant monté pivotant sur un premier axe 22 situé sur une patte 78 ou analogue en dessous du caisson.

De façon connue, ce crochet 20, 21 a une position origine stable sous l'action d'un ressort de rappel ou analogue 71 telle que, pour être maintenue fermée, la porte est emprisonnée entre le caisson 6 et le bec 73 du crochet.

Le système comporte en outre un troisième axe de rotation 32 sensiblement parallèle au premier axe 22 et lié, par exemple par une patte 77 ou analogue, à une partie située en dessous du caisson 6 et plus vers l'avant 75 de ce caisson que la patte 78, une came 34 à deux première et seconde extrémités 36, 38 montée en rotation sur le troisième axe 32 de façon que ces deux extrémités soient situées de part et d'autre de ce troisième axe 32 et que l'une soit plus proche du fond 40 du caisson 6 que l'autre.

Il comporte en outre une tige de liaison rigide 42 de longueur constante dont les deux extrémités sont respectivement montées en rotation sur la première extrémité 36 de la came 34 et sur un point 44, 45 lié à une partie 72 du crochet 20, 21 en déport par rapport à sa partie principale, ce point 44, 45 n'étant en outre pas situé sur le premier axe 22, une butée 50 montée en translation par rapport au châssis 4 dans un espace 52 délimité par le fond 40 du caisson 6 et les bords libres 11, 12 des deux rails 7, 8 et située entre la seconde extrémité 38 de la came et l'avant 53 du châssis 4, et des moyens commandables 60 pour commander le déplacement en translation de la butée 50 par rapport au châssis de façon que, dans son déplacement de l'avant 53 vers l'arrière 3 du châssis 4, cette butée 50 soit apte à venir contre la seconde extrémité 38 de la came 34 et appuyer sur elle pour entraîner la rotation de la came et en conséquence le déverrouillage de la porte arrière 1 de la benne 2 comme il sera explicité ci-après.

Selon un mode de réalisation possible et préférentiel, les moyens commandables 60 définis ci-dessus pour commander le déplacement en translation de la butée 50 par rapport au châssis 4, sont constitués par un vérin 61 de tout type, électrique, hydraulique, pneumatique, magnétique, mécanique, etc., comportant une tige de vérin 62 apte à être déplacée dans un mouvement de va et vient par rapport à un corps de vérin 63, le corps de vérin 63 étant solidaire du châssis 4 du véhicule 5 par tous moyens connus des hommes du métier, l'extrémité libre de la tige de vérin 62 constituant la butée 50.

De façon préférentielle, comme illustré sur les figures, la came 34 est agencée sur le troisième axe 32 de façon que sa première extrémité 36 soit plus proche du fond 40 du caisson 6 que sa seconde extrémité 38. Cette configuration permet d'éloigner au maximum le vérin 61 du fond 40 du caisson 6 et de mieux l'intégrer au châssis 4.

Il est par ailleurs mentionné que les éléments terminaux de commande du vérin 62, comme des boutons, manettes ou analogues, sont très avantageusement situés dans la cabine 70 du véhicule 5, par exemple à proximité de la place du conducteur. Ces éléments terminaux sont bien connus en eux-mêmes. Ils n'ont donc pas été spécifiquement représentés, mais simplement évoqués en 81.

Selon une réalisation préférentielle aussi bien sur le plan de la facilité de réalisation que sur celui de la fiabilité, le vérin 61 est avantageusement situé, comme illustré et plus particulièrement visible sur la figure 2, sur le châssis 4 et dans l'espace 52, mais entre les deux rails 7, 8 quand, bien entendu, la benne 2 est positionnée sur le châssis 4, comme représenté sur les deux figures 1 et 2.

Comme mentionné ci-dessus, le système peut comporter plusieurs crochets de retenue, en général deux 20, 21 avec les bennes les plus courantes, comme illustré sur la figure 2. Dans ce cas, la came 34 comporte autant de premières extrémités 36 que de crochets 20, 21 mais, comme visible sur la figure 2, une seule seconde extrémité 38. Chaque première extrémité 3 est montée en coopération avec un crochet par une tige de liaison 42.

La seconde extrémité 38 est définie sur une branche de came située sensiblement dans la partie médiane du troisième axe 32, tandis que les deux premières extrémités 36 sont définies sur deux branches de came respectivement situées dans deux plans passant par les crochets 20, 21 et perpendiculaires à ce troisième axe 32.

Le système de déverrouillage décrit ci-dessus s'utilise et fonctionne de la façon suivante.

On suppose tout d'abord que la benne 2 est située, vide, sur le châssis 4 du véhicule 5. Lorsque le conducteur du véhicule veut placer la benne vide sur le sol tout en maintenant la porte arrière fermée au moyen des crochets 20, 21, il commande le vérin 61 depuis l'intérieur de la cabine 70 du véhicule 5, de façon que la tige 62 soit rentrée dans le corps de vérin 63 et que la butée 50 ne soit donc pas en appui sur la seconde extrémité 38 de la came 34.

De cette façon, les crochets 20, 21 maintiennent la porte fermée et bloquée, et le conducteur peut déposer la benne sur le sol, notamment comme mentionné au préambule de la description au moyen d'un ensemble de bras et de vérins schématiquement représenté sur les figures par la référence B.D..

Quand la benne est pleine des déchets à amener à la décharge, le conducteur revient la chercher et la remonte sur le châssis de son véhicule, toujours comme décrit au préambule de la description. La seconde extrémité 38 de la came 34 se trouve alors en regard de la butée 50, comme représenté sur les deux figures.

Lorsque le véhicule est arrivé sur le lieu de la décharge où doivent être déversés les déchets, tout en restant dans sa cabine, le conducteur commande avec les moyens 81, le vérin 61 pour faire sortir la tige 62 du corps de vérin 63 de façon que son extrémité constituant la butée 50 vienne appuyer sur la seconde extrémité 38 de la came 34.

Par référence à la figure 1, lorsque la tige 62 appuie sur l'extrémité 38 de la came, cette dernière subit une rotation senestrorsum autour de l'axe 32. Dans cette rotation, la première extrémité 36 de la came tire sur le point 44, 45 du crochet 20, 21 via la tige de liaison 42 et fait subir au crochet une rotation dextrorsum autour de l'axe 22, ce qui déplace vers le bas le bec 73 et libère de ce fait la porte 1, puisque la porte n'est plus emprisonnée entre le bec 73 et l'arrière 76 du caisson 6.

Toujours en restant dans sa cabine, le conducteur commande le relevage de la benne pour l'incliner vers l'arrière, ce qui amorce le déversement des déchets à l'endroit voulu, tout en augmentant l'ouverture de la porte.

Pendant le déversement des déchets, de préférence, le conducteur commande le vérin pour ramener la tige 62 dans le corps de vérin 63. Sous l'action du ressort de rappel 71, le crochet 20, 21 revient alors à sa position origine avec son bec 73 sur le trajet de rotation de la porte.

Lorsque la benne est totalement vidée des déchets, le conducteur la ramène à sa position horizontale sur le châssis du véhicule. Dans ce mouvement, dans le cas où l'axe de rotation de la porte 1 de la benne est horizontal en partie haute de celle-ci, comme illustré sur les figures, la porte revient automatiquement dans sa position de fermeture, par un mouvement de bascule par rapport au caisson, en repoussant le bec 73 du crochet 20, 21 grâce au plan incliné 74 dont ce bec est généralement muni (figure 1). La porte se retrouve alors automatiquement à nouveau verrouillée.

Si la porte ne se verrouille pas automatiquement comme décrit ci-dessus, ce qui est possible aussi bien dans le cas de l'exemple décrit ci-dessus et illustré sur les figures que dans le cas où la porte est constituée de deux battants montés pivotants autour de deux axes verticaux montés respectivement sur les bords arrières verticaux de la benne, le conducteur peut déplacer son véhicule jusqu'à un endroit propre et dégagé de tout danger et, seulement alors, descendre de sa cabine pour verrouiller la porte et/ou vérifier son verrouillage, mais en toute sécurité.

A la description ci-dessus, il apparaît aisément que le système de déverrouillage selon l'invention ne présente plus les inconvénients des systèmes de déverrouillage de l'art antérieur, mentionnés au préambule de cette description.

## Revendications

1. Système de déverrouillage de la porte arrière (1) d'une benne (2) apte à être déchargée par l'arrière (3) du châssis (4) d'un véhicule automobile (5), ladite benne (2) comportant un caisson (6) monté sur au moins deux bords (9, 10) respectifs de deux rails de support (7, 8), les deux dits rails de support (7, 8) étant aptes à coulisser en translation, par leur bords libres (11, 12) opposés à ceux (9, 10) qui sont solidaires du caisson (6), sur le châssis (4) du véhicule (5), le système de verrouillage comportant :
• au moins un crochet de retenue (20, 21) apte à maintenir la porte arrière (1) en position fermée et monté pivotant autour d'un premier axe (22), ladite porte étant montée en rotation autour d'au moins un deuxième axe (24),
• un troisième axe de rotation (32) lié à ladite benne (2) sensiblement parallèle audit premier axe (22),
• une came (34) à deux première et seconde extrémités (36, 38) montée en coopération avec ledit troisième axe (32),
• une tige de liaison (42) dont les deux extrémités sont respectivement montées en rotation sur la première extrémité (36) de la came (34) et sur un point (44, 45) d'une partie liée au crochet, ledit point n'étant pas situé sur le premier axe (22),
• une butée (50) montée en translation par rapport au châssis (4) dans un espace (52) délimité par le fond (40) du caisson (6) et les bords libres (11, 12) des deux rails (7, 8) et située entre la seconde extrémité (38) de la came et l'avant (53) du châssis (4), et
• des moyens commandables (60) pour commander le déplacement en translation de ladite butée (50) par rapport au châssis (4),
**caractérisé par le fait que** ladite came est en outre agencée de façon que ses première et seconde extrémités (36, 38) soient situées de part et d'autre du troisième axe (32) et que l'une soit plus proche du fond du caisson que l'autre, et que lesdits moyens commandables (60) pour commander le déplacement en translation de ladite butée (50) par rapport au châssis (4) sont agencés de façon que, dans le déplacement de ladite butée (50) sensiblement de l'avant vers l'arrière dudit châssis (4), cette dernière soit apte à venir en appui contre la seconde extrémité (38) de la came (34) pour entraîner le déverrouillage de la porte arrière (1) de la benne (2).

2. Système de déverrouillage selon la revendication 1, **caractérisé par le fait que** les moyens commandables (60) pour commander le déplacement en translation de la butée (50) par rapport au châssis (4), sont constitués par un vérin (61) comportant une tige de vérin (62) apte à être déplacée par rapport à un corps de vérin (63), ledit corps de vérin (63) étant solidaire du châssis (4) du véhicule (5), l'extrémité libre de ladite tige de vérin (62) constituant la butée (50).

3. Système de déverrouillage selon la revendication 2, **caractérisé par le fait que** ledit vérin (61) est l'un des vérins suivants : vérin hydraulique, vérin électrique, vérin magnétique, vérin pneumatique.

4. Système de déverrouillage selon l'une des revendications 2 et 3,
**caractérisé par le fait que** ledit vérin (61) est situé sur le châssis (4) dans ledit espace (52) et entre les deux rails (7, 8) quand la benne (2) est chargée sur ledit châssis.

5. Système de déverrouillage selon l'une des revendications 1 à 4,
**caractérisé par le fait qu'**il comporte plusieurs crochets de retenue (20, 21), ladite came (34) comportant autant de premières extrémités (36) que de crochets (20, 21), chaque première extrémité (36) étant montée en coopération avec un crochet par une tige de liaison (42), et une seule seconde extrémité (38).

6. Système de déverrouillage selon l'une des revendications 1 à 5,
**caractérisé par le fait que** ladite came (34) est agencée de façon que sa première extrémité (36) est plus proche du fond (40) du caisson (6) que sa seconde extrémité (38).

## Claims

1. A system for unlocking the rear door (1) of a bed body (2) suitable for being unloaded from the rear (3) of the chassis (4) of a motor vehicle (5), said bed body (2) comprising a box (6) mounted on at least two respective edges (9, 10) of two support rails (7, 8), said two support rails (7, 8) being suitable for sliding in translation via their free edges (11, 12) opposite from their free edges (9, 10) that are secured to the box (6), on the chassis (4) of the vehicle (5), the locking system comprising:
at least one retaining hook (20, 21) suitable for holding the rear door (1) in the closed position and mounted to pivot about a first axis (22), said door being mounted to turn about at least one second axis (24);
a third axis of rotation (32) connected to said bed body (2) substantially parallel to said first axis (22);
a cam (34) having first and second ends (36, 38) mounted to co-operate with said third axis (32);
a link rod (42) having its two ends pivotally mounted respectively to the first end (36) of the cam (34) and to a point (44, 45) of a portion connected to the hook, said point not being situated on the first axis (22);
an abutment (50) mounted to move in translation relative to the chassis (4) in a space (52) defined by the bottom (40) of the box (6) and the free edges (11, 12) of the two rails (7, 8), and situated between the second end (38) of the cam and the front (53) of the chassis (4); and
controllable means (60) for controlling the movement in translation of said abutment (50) relative to the chassis (4);
the system being **characterized by** the facts that said cam is also arranged in such a manner that its first and second ends (36, 38) are situated on either side of the third axis (32) and that one is closer to the bottom of the box than the other, and that said controllable means (60) for controlling the movement in translation of said abutment (50) relative to the chassis (4) are arranged in such a manner that, in the movement of said abutment (50) substantially from the front towards the rear of said chassis (4), said abutment is suitable for coming to bear against the second end (38) of the cam (34) so as to cause the rear door (1) of the bed body (2) to be unlocked.

2. An unlocking system according to claim 1, **characterized by** the fact that the controllable means (60) for controlling the movement in translation of the abutment (50) relative to the chassis (4) are constituted by an actuator (61) having an actuator rod (62) suitable for being moved relative to an actuator body (63), said actuator body (63) being secured to the chassis (4) of the vehicle (5), the free end of said actuator rod (62) constituting the abutment (50).

3. An unlocking system according to claim 2, **characterized by** the fact that said actuator (61) is one of the following actuators: a hydraulic actuator, an electrical actuator, a magnetic actuator, a pneumatic actuator.

4. An unlocking system according to claim 2 or claim 3, **characterized by** the fact that said actuator (61) is situated on the chassis (4) in said space (52) and between the two rails (7, 8) when the bed body (2) is loaded on said chassis.

5. An unlocking system according to any one of claims 1 to 4, **characterized by** the fact that it includes a plurality of retaining hooks (20, 21), said cam (34) comprising a single second end (38) and as many first ends (36) as there are hooks (20, 21), each first end (36) being mounted to co-operate with one hook via a link rod (42).

6. An unlocking system according to any one of claims 1 to 5, **characterized by** the fact that said cam (34) is arranged in such a manner that is first end (36) is closer to the bottom (40) of the box (6) than is its second end (38).

## Patentansprüche

1. System zum Entriegeln der hinteren Klappe (1) einer Kippermulde (2), die über die Rückseite (3) des Rahmens (4) eines Kraftfahrzeugs (5) entladen werden kann, wobei die Kippermulde (2) einen Kasten (6) aufweist, der auf wenigstens zwei jeweiligen Kanten (9, 10) von zwei Tragschienen (7, 8) montiert ist, wobei diese zwei Tragschienen (7, 8) mit ihren freien Kanten (11, 12) gegenüber jenen (9, 10), die mit dem Kasten (6) fest verbunden sind, auf dem Rahmen (4) des Fahrzeugs (5) translatorisch gleiten können, wobei das Verriegelungssystem umfasst:
- wenigstens einen Haltehaken (20, 21), der die hintere Klappe (1) in der geschlossenen Stellung halten kann und schwenkbar um eine erste Achse (22) angebracht ist, wobei die Klappe drehbar um wenigstens eine zweite Achse (24) angebracht ist,
- eine dritte Drehachse (32), die mit der Kippermulde (2) verbunden ist und zu der ersten Achse (22) im Wesentlichen parallel ist,
- einen Nocken (34) mit einem ersten und einem zweiten Ende (36, 38), der in Zusammenwirkung mit der dritten Achse (32) angebracht ist,
- einen Verbindungsstift (42), dessen zwei Enden am ersten Ende (36) des Nockens (34) bzw. an einem Punkt (44, 45) eines mit dem Haken verbundenen Teils drehbar angebracht sind, wobei sich der Punkt nicht auf der ersten Achse (22) befindet,
- einen Anschlag (50), der in Bezug auf den Rahmen (4) translatorisch beweglich in einem Raum (52) angebracht ist, der durch den Boden (40) des Kastens (6) und durch die freien Kanten (11, 12) der zwei Schienen (7, 8) begrenzt ist, und sich zwischen dem zweiten Ende (38) des Nockens und der Vorderseite (53) des Rahmens (4) befindet, und
- steuerbare Mittel (60), um die translatorische Verlagerung des Anschlags (50) in Bezug auf den Rahmen (4) zu steuern,
**dadurch gekennzeichnet, dass** der Nocken außerdem so beschaffen ist, dass sich sein erstes und sein zweites Ende (36, 38) beiderseits der dritten Achse (32) befinden, dass sich eines hiervon näher am Boden des Kastens als das andere befindet und dass die steuerbaren Mittel (60) zum Steuern der translatorischen Verlagerung des Anschlags (50) in Bezug auf den Rahmen (4) so beschaffen sind, dass bei der Verlagerung des Anschlags (50) im Wesentlichen von der Vorderseite zur Rückseite des Rahmens (4) dieser Letztere an dem zweiten Ende (38) des Nockens (34) in Anschlag gelangen kann, um die hintere Klappe (1) der Kippermulde (2) zu entriegeln.

2. Entriegelungssystem nach Anspruch 1, **dadurch gekennzeichnet, dass** die steuerbaren Mittel (60) zum Steuern der translatorischen Verlagerung des Anschlags (50) in Bezug auf den Rahmen (4) durch einen Stellantrieb (61) gebildet sind, der eine Stellantriebstange (62) aufweist, die in Bezug auf einen Stellantriebkörper (63) verlagerbar ist, wobei der Stellantriebkörper (63) mit dem Rahmen (4) des Fahrzeugs (5) fest verbunden ist und das freie Ende der Stellantriebstange (62) den Anschlag (50) bildet.

3. Entriegelungssystem nach Anspruch 2, **dadurch gekennzeichnet, dass** der Stellantrieb (61) einer der folgenden Stellantriebe ist: Hydraulikstellantrieb, elektrischer Stellantrieb, magnetischer Stellantrieb, Druckluftstellantrieb.

4. Entriegelungssystem nach einem der Ansprüche 2 und 3, **dadurch** gekenntzeichnet, dass sich der Stellantrieb (61) am Rahmen (4) in dem Raum (52) und zwischen den zwei Schienen (7, 8) befindet, wenn die Kippermulde (2) auf den Rahmen geladen ist.

5. Entriegelungssystem nach einem der Ansprüche 1 bis 4, **dadurch gekennzeichnet, dass** es mehrere Haltehaken (20, 21) aufweist, wobei der Nocken (34) ebenso viele erste Enden (36) aufweist wie Haken (20, 21) vorhanden sind, wobei jedes erste Ende (36) in Zusammenwirkung mit einem Haken durch einen Verbindungsstift (42) angebracht ist, und nur ein einziges zweites Ende (38) aufweist.

6. Entriegelungssystem nach einem der Ansprüche 1 bis 5, **dadurch gekennzeichnet, dass** der Nocken (34) so beschaffen ist, dass sich sein erstes Ende (36) näher als sein zweites Ende (38) am Boden (40) des Kastens (6) befindet.
